# DEMANDE DE BREVET EUROPEEN

(11) **EP 4 431 334 A1**
(43) Date de publication de la demande: **18.09.2024**
(21) Numéro de dépôt: 24163466.6
(22) Date de dépôt: 14.03.2024
(51) Int. Cl.: B60L 53/30, B60L 53/53, B60L 53/16, B60L 53/35, B60L 53/57

(54) **DISPOSITIF AUTONOME INCLUANT UN SYSTEME DE COUPLAGE POUR LA RECHARGE D'UNE BATTERIE D'UN VEHICULE**

(30) Priorité: 14.03.2023 FR 2302338
(71) Demandeur: Mob-Energy, 69200 Venissieux (FR)
(72) Inventeur: LEVY, Victor, 69008 LYON (FR); HADDOUT, Ilyass, 69003 LYON (FR)
(74) Mandataire: Be IP

(57) **Abrégé**

L'invention concerne un dispositif autonome de chargement de batterie comprenant :
- un organe de raccordement pour raccorder électriquement le dispositif autonome à un module d'accouplement, et
- un support (40) incluant :
∘ un pied (401), et
∘ un plateau porte-charge (402) sous lequel est fixé l'organe de raccordement (41),
∘ au moins un élément de liaison élastique (403) monté entre le pied (401) et le plateau porte-charge (402) et configuré pour autoriser un pivotement multidirectionnel du plateau porte-charge (402) relativement au pied (401).

## Description

### DOMAINE DE L'INVENTION

La présente invention concerne le domaine technique des dispositifs autonomes permettant de charger/recharger des moyens de stockage d'énergie électrique d'un véhicule comprenant un moteur électrique.

Un tel système peut notamment mais non exclusivement être utilisé pour la charge/recharge de moyens de stockage dans un environnement à espace restreint, tel qu'une aire de stationnement composée de stationnements en ouvrage et/ou de stationnements en voirie.

On entend dans le cadre de la présente invention par « *stationnements en ouvrage* », des stationnements organisés en emplacements délimités dans un espace clos à accès contrôlé, tel qu'un parking aérien, souterrain ou de surface. On entend par « *stationnements en voirie* », des stationnements organisés en emplacements - délimités ou non - dans un espace ouvert payant ou gratuit.

### ARRIERE PLAN DE L'INVENTION

On connait dans l'état de la technique le document US9592742 décrivant un dispositif de forme cubique, motorisé et équipé de divers câbles en sortie, pouvant être déplacé sur un parking jusqu'aux abords d'un véhicule électrique. Ce dispositif permet la recharge d'un véhicule électrique à partir de batteries stockées dans le dispositif. Un inconvénient de cette solution est qu'elle nécessite une intervention humaine afin de brancher le dispositif au véhicule.

On connaît aussi le document US9778653 décrivant des méthodes et des systèmes de transfert d'énergie à partir d'un engin autonome sans conducteur, vers un véhicule électrique. Le véhicule électrique fait une demande de recharge, et l'engin autonome sans conducteur le rejoint à un point de rendez-vous, se fixe au véhicule électrique et permet de transférer de l'énergie. Un inconvénient de cette solution est que l'utilisation de drone (comme décrit à la figure 6 de US9778653) pour transporter des batteries pose des problématiques de sécurité. En outre cette solution n'est pas adaptée dans des espaces clos.

On connaît aussi du document KR 2020/0037548 une solution de chargement/rechargement de véhicule basé sur l'utilisation d'un robot de chargement/rechargement autonome contenant des batteries, ainsi que d'un boitier d'interfaçage aimanté. Le boitier d'interfaçage comprend une prise de raccordement destinée à recevoir l'une des extrémités d'un câble de connexion électrique, l'autre extrémité du câble étant destinée à être reliée aux moyens de stockage du véhicule à charger/recharger. Le principe de fonctionnement de la solution décrite dans KR 2020/0037548 est le suivant. L'utilisateur place le boitier d'interfaçage aimanté au niveau de la plaque d'immatriculation du véhicule électrique et commande sa recharge. Suite à cette demande, le robot autonome se déplace jusqu'aux abords du véhicule et vient en contact avec le boitier d'interfaçage pour permettre le transfert d'énergie électrique vers les moyens de stockage d'énergie électrique du véhicule. Un inconvénient de la solution décrite dans KR 2020/0037548 est qu'il y'a un risque de dégradation du véhicule lors du couplage du robot de chargement sur le boitier d'interfaçage.

Un but de la présente invention est de proposer un dispositif autonome de charge/recharge des moyens de stockage d'énergie électrique d'un véhicule permettant de pallier au moins l'un des inconvénients précités.

### BREVE DESCRIPTION DE L'INVENTION

A cet effet, l'invention propose un dispositif autonome de chargement/rechargement de moyens de stockage d'énergie électrique d'un véhicule, le dispositif autonome s'étendant verticalement selon une axe verticale A-A' et comprenant :
- un socle mobile incluant des roues pour le déplacement du dispositif autonome,
- un châssis monté sur le socle mobile, le châssis étant adapté pour accueillir des batteries,
- un carénage autour du châssis, le carénage comprenant une niche de réception d'un module d'accouplement électriquement raccordé aux moyens de stockage d'énergie électrique du véhicule,
- un système de couplage logé dans la niche de réception, le système de couplage étant adapté pour coopérer avec le module d'accouplement et incluant :
   ∘un organe de raccordement pour raccorder électriquement le dispositif autonome au module d'accouplement, et
   ∘des moyens de déplacement pour déplacer l'organe de raccordement en translation selon l'axe A-A' entre une position escamotée et une position déployée, l'organe de raccordement étant plus proche du socle mobile dans la position déployée que dans la position escamotée,
***remarquable en ce que*** le système de couplage comprend en outre :
- un support fixé au châssis et sous lequel est fixé l'organe de raccordement, ledit support incluant :
   ∘un pied fixé au châssis, et
   ∘un plateau porte-charge sous lequel est fixé l'organe de raccordement,
   ∘au moins un élément de liaison élastique monté entre le pied et le plateau porte-charge, ledit et au moins un élément de liaison élastique autorisant un pivotement multidirectionnel du plateau porte-charge relativement au pied.

Des aspects préférés mais non limitatifs du dispositif mobile selon l'invention sont les suivants :
- le plateau porte-charge peut s'étendre sensiblement dans un plan, ledit et au moins un élément de liaison élastique autorisant un débattement angulaire limité du plateau porte-charge selon des axes contenus dans un plan s'étendant parallèlement au plan du plateau porte-charge ;
- le pied et le plateau porte-charge peuvent s'étendre sensiblement dans des plans respectifs, ledit et au moins un élément de liaison élastique étant configuré pour :
   ∘maintenir le pied et le plateau porte-charge dans des plans parallèles en l'absence d'une contrainte mécanique appliquée sur le plateau porte-charge,
   ∘maintenir le pied et le plateau porte-charge dans des plans sécants lorsqu'une contrainte mécanique - dont la composante est sécante à l'axe A-A' - est appliquée sur le plateau porte-charge ;
- chaque élément de liaison élastique peut être fixé au pied d'une part et au plateau porte-charge d'autre part, et comporter :
   ∘un ressort hélicoïdal, et
   ∘une tige guide coaxiale au ressort hélicoïdal, la tige guide incluant au moins une articulation à pivot à l'une de ses extrémités libres ;
- les moyens de déplacement peuvent comprendre au moins un moteur pas à pas pour déplacer l'organe de raccordement en translation selon un axe perpendiculaire à l'axe verticale A-A' ;
- les moyens de déplacement peuvent comprendre au moins un moteur pas à pas pour déplacer l'organe de raccordement en translation selon l'axe A-A' entre la position escamotée et la position déployée ;
- l'organe de raccordement peut comporter :
   ∘au moins une embase ayant un connecteur électrique destiné à être connecté électriquement à une prise électrique complémentaire ménagée dans le module d'accouplement,
   ∘au moins une plaque de centrage s'étendant parallèlement à l'embase, la plaque de centrage étant positionnée sous l'embase de sorte que la plaque de centrage est plus éloignée du châssis que l'embase,
   ∘au moins un élément de rappel élastique entre l'embase et la plaque de centrage,
   de sorte que la plaque de centrage est montée mobile en translation relativement à l'embase ;
- l'organe de raccordement peut comprendre en outre :
   ∘au moins un capteur de position pour détecter si l'organe de raccordement est dans la position escamotée ou dans la position déployée,
   ∘au moins un capteur de présence pour détecter la présence et le positionnement du module d'accouplement ;
- chaque élément de rappel élastique peut comprendre :
   ∘un ressort hélicoïdal, l'une des extrémités du ressort hélicoïdal étant fixée à l'embase, et l'autre des extrémités du ressort hélicoïdal étant fixés à la plaque de centrage, et
   ∘une tige guide s'étendant à l'intérieur du ressort hélicoïdal, la tige guide étant fixée à la plaque de centrage de sorte à s'étendre perpendiculairement à celle-ci, l'embase comportant une lumière traversante pour le passage de la tige guide, l'extrémité libre de la tige guide comprenant une butée s'étendant en regard d'une face de l'embase opposée à la plaque de centrage ;
- la plaque de centrage peut comprendre au moins un pion d'alignement s'étendant en saillie vers l'extérieur d'une face de la plaque de centrage opposée à l'embase, ledit pion étant destiné à coopérer avec un trou borgne de forme complémentaire ménagé dans le module d'accouplement ;
- chaque pion peut être de forme tronconique partielle ou totale ;
- le système de couplage peut comprendre en outre des moyens de guidage pour guider le déplacement en translation de l'organe de raccordement, lesdits moyens de guidage comportant au moins une barre filetée adaptée pour coopérer avec une ouverture taraudée ménagée dans l'embase, de sorte que la mise en rotation de ladite et au moins une barre filetée induit le déplacement en translation de l'organe de raccordement.

### BREVE DESCRIPTION DES DESSINS

D'autres avantages et caractéristiques du dispositif autonome selon l'invention ressortiront mieux de la description qui va suivre de plusieurs variantes d'exécution, données à titre d'exemples non limitatifs, à partir des dessins annexés sur lesquels :
- La figure 1 est une représentation en perspective du dispositif autonome selon l'invention,
- La figure 2 est une représentation en vue de côté du dispositif autonome de la figure 1,
- La figure 3 est une représentation en vue de face du dispositif autonome de la figure 1,
- La figure 4 est une représentation schématique du dispositif autonome de la figure 1,
- La figure 5 est une représentation schématique d'un exemple d'utilisation du dispositif autonome pour charger/recharger des moyens de stockage d'énergie électrique d'un véhicule comprenant un moteur électrique,
- La figure 6 est une représentation schématique en perspective d'un système de couplage du dispositif autonome,
- La figure 7 est une représentation schématique en vue arrière du système de couplage illustré à la figure 6,
- La figure 8 est une représentation schématique en vue de côté du système de couplage illustré aux figures 6 et 7,
- La figure 9 est une représentation cinématique du système de couplage illustré aux figures 6 à 8.

### DESCRIPTION DETAILLEE DE L'INVENTION

On va maintenant décrire différents exemples de réalisation de l'invention en référence aux figures. Dans ces différentes figures, les éléments équivalents sont désignés par la même référence numérique.

Par ailleurs, dans la suite du texte, les termes « *vertical », « horizontal », « dessus »* ou *« sur »,* et *« dessous »* ou *« sous »* seront utilisés en référence à un référentiel orthonormé dont l'un des axes est sensiblement parallèle aux axes longitudinaux du dispositif autonome. Cet axe sensiblement parallèle aux axes longitudinaux du dispositif autonome sera considéré comme l'axe vertical dans les exemples décrits.

### 1. Dispositif autonome

### 1.1. Présentation

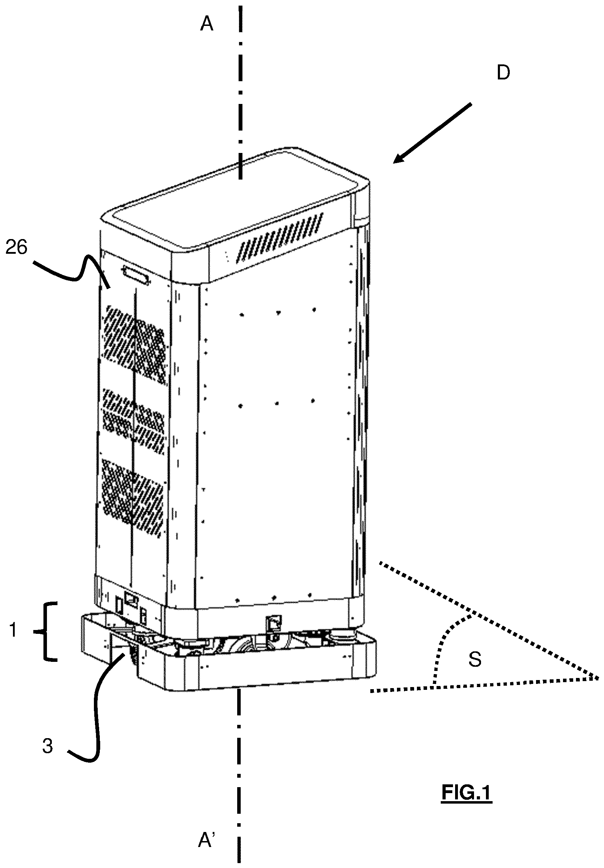

On a illustré à la figure 1 un exemple de dispositif autonome D selon l'invention. Ce dispositif autonome D s'étend longitudinalement vers le haut à partir du sol selon un axe longitudinal A-A'.

En référence aux figures 1 à 4, le dispositif autonome D comporte :
- un socle mobile 1 intégrant des roues 11 pour le déplacement du dispositif autonome,
- un châssis 2 monté sur le socle mobile 1, le châssis 2 étant configuré pour accueillir différents composants du dispositif autonome, tel que :
   ∘des batteries 21,
   ∘des convertisseurs de puissance 22,
   ∘un circuit de refroidissement,
   ∘des moyens d'acquisition d'image, etc.
- un carénage 26 autour du châssis, et
- un système de couplage 4 pour permettre de connecter électriquement le dispositif autonome aux moyens de stockage d'énergie électrique d'un véhicule.

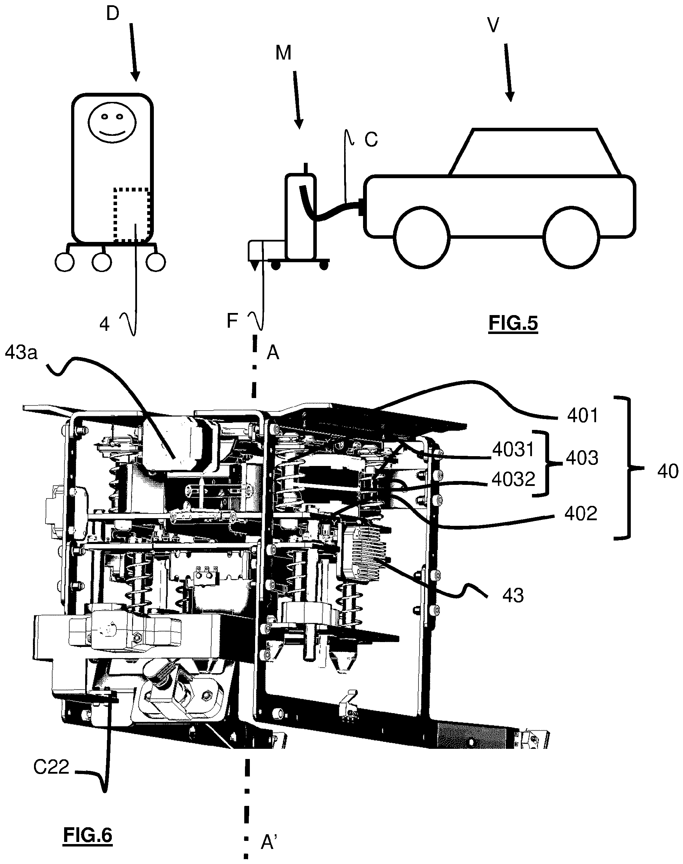

En référence à la figure 5, le dispositif autonome D permet de charger/recharger les moyens de stockage d'un véhicule électrique V par l'intermédiaire d'un module d'accouplement M (élément indépendant) se branchant au véhicule électrique V grâce à un câble C électriquement conducteur (opération exécutée par l'utilisateur du véhicule électrique V), et disposant d'une façade F - incluant une (ou plusieurs) prise(s) électrique(s) - configurée pour s'apparier au système de couplage 4 sans intervention extérieure afin d'assurer le passage - de manière filaire ou par induction - de l'énergie électrique depuis le dispositif autonome D vers le module d'accouplement M. Cette énergie électrique est ensuite transmise aux moyens de stockage du véhicule électrique V par l'intermédiaire du câble C.

Plus précisément, le système de couplage 4 comprend un organe de raccordement électrique 41 apte à se déplacer en translation verticale pour se connecter au module d'accouplement M, comme il sera décrit plus en détails dans la suite.

Le fait que la connexion du dispositif autonome D soit réalisée *« au sol »* via le déplacement en translation verticale d'un organe de raccordement 41 permet de limiter les risques de dégradation du véhicule électrique V, notamment par rapport à une solution autonome de chargement/rechargement basée sur la connexion d'un dispositif de charge/recharge directement avec le véhicule (ou avec un module d'accouplement fixé sur le véhicule).

### 1.2. Eléments généraux du dispositif

### 1.2.1. Socle mobile

Le socle mobile 1 peut être du type décrit dans la demande de brevet français FR2100632 déposée au nom de la demanderesse.

Un tel socle mobile 1 comprend un cadre (non représenté) et des roues motrices et folles 11 pour permettre le déplacement du dispositif autonome.

En particulier, le socle mobile 1 comprend deux roues motrices et quatre roulettes folles agencées par triplet, la roue et les deux roulettes de chaque triplet étant alignées le long d'un bord latéral respectif du socle mobile. Une première roulette de chaque triplet est montée à une extrémité du cadre. La roue motrice et la deuxième roulette folle sont quant à elles fixées sur un organe oscillant monté pivotant sur le cadre autour d'un axe de pivotement transversal perpendiculaire aux bords latéraux du socle 1.

Un tel socle mobile 1 qui est connu de FR2100632 ne sera pas décrit plus en détail dans la suite.

### 1.2.2. Châssis

Le châssis 2 supporte différents composants constituant le dispositif autonome D. Le châssis 2 est réalisé à partir de tubes définissant un squelette pour le dispositif autonome D.

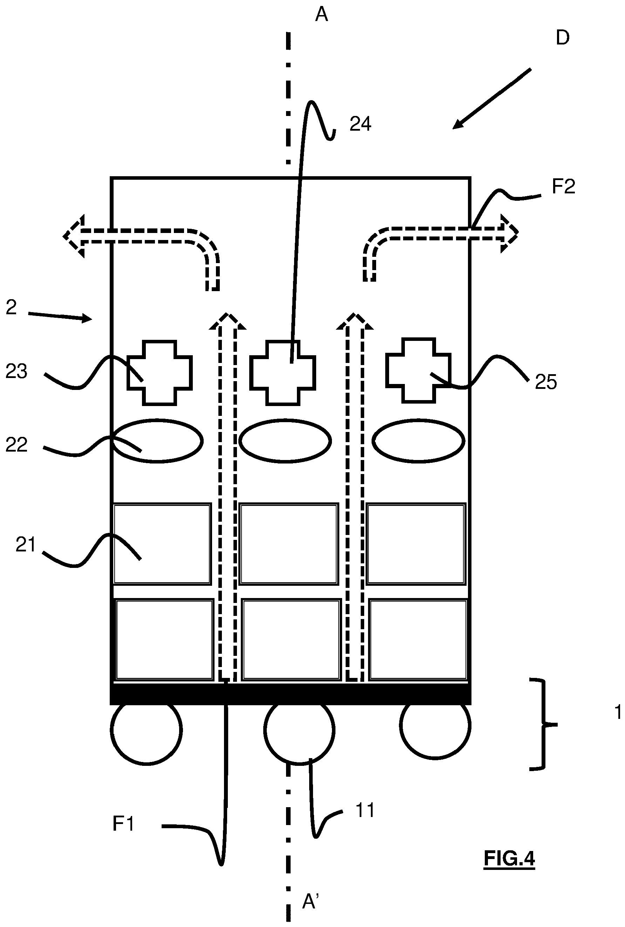

Dans le mode de réalisation illustré à la figure 4, le châssis 2 présente une forme globalement parallélépipédique. Il se compose :
- d'une « *partie inférieure* » destiné à être fixée au socle mobile 1,
- d'une *« partie centrale »* adaptée pour contenir différents composants du dispositif autonome D,
- d'une *« partie supérieure »* opposée à la partie inférieure et correspondant à la *« tête »* du dispositif autonome D.

Le châssis 2 est configuré pour accueillir des batteries de stockage 21 permettant de stocker de l'énergie électrique en vue du chargement/rechargement des moyens de stockage du véhicule V. Ces batteries 21 sont de préférence positionnées dans une partie - dite *« partie basse »* - du châssis 2 la plus proche du sol. En effet, les batteries 21 du dispositif autonome D étant les composants les plus lourds, il est préférable de les positionner à proximité du sol pour optimiser la stabilité du dispositif autonome D.

Le châssis 2 est en outre configuré pour accueillir :
- des convertisseurs de puissance 22 (i.e. convertisseurs AC/DC et DC/AC),
- des moyens d'acquisition d'image (tels que des caméras, ou tout autre capteur connu de l'homme du métier),
- une unité de contrôle 23 pour le traitement des images acquises par les moyens d'acquisition, et le pilotage des composants du dispositif autonome,
- des mémoires 24 pour le stockage d'information,
- des moyens de communication 25 pour permettre l'échange d'informations entre le dispositif autonome et un centre de gestion distant,
- des moyens de refroidissement des composants du dispositif autonome D.

Les différents éléments originaux du dispositif autonome D et leurs avantages associés seront décrits plus en détails dans la suite.

### 1.2.3. Carénage

Le carénage 26 consiste en une ou plusieurs tôles fixées sur le châssis 2 du dispositif autonome D. Le carénage 26 permet d'améliorer l'esthétique du dispositif autonome D en *« habillant »* les composants le constituant. Le carénage 26 permet en outre de protéger des composants des éventuelles agressions extérieures.

Dans le mode de réalisation illustré aux figures 1 à 3, le carénage 26 est composé :
- de quatre panneaux destinés à recouvrir les faces latérales et transversales du châssis 2, les panneaux recouvrant les faces transversales du châssis définissant respectivement une paroi avant et une paroi arrière du dispositif autonome D, et
- d'un couvercle destiné à coiffer la face supérieure du châssis 2.

En référence à la figure 1, le carénage 26 comprend une cavité définissant une niche de réception 3 d'au moins une partie du module d'accouplement M. Cette cavité est avantageusement manégée dans la paroi avant du dispositif autonome D, le système de couplage 4 étant contenu dans la niche de réception 3.

Ainsi pour établir une connexion avec les moyens de stockage du véhicule V, le dispositif autonome D se déplace jusqu'au module d'accouplement M et s'oriente de sorte à faire partiellement pénétrer le module d'accouplement dans la niche de réception 3 (et en particulier la façade F configurée pour s'apparier au système de couplage 4).

Une fois le module d'accouplement M partiellement logé dans la niche de réception 3, l'unité de contrôle commande le déplacement de l'organe de raccordement 41 pour le connecter électriquement à la façade F du module d'accouplement M.

Le fait de réaliser la connexion électrique dans la niche de réception 3 permet d'augmenter la sécurité du dispositif autonome D en limitant l'accessibilité à l'utilisateur de l'organe de raccordement 41 et de la façade F du module d'accouplement M.

### 1.2.4. Circuit de refroidissement

Comme indiqué précédemment, le dispositif autonome D comprend un circuit de refroidissement permettant de limiter l'échauffement de ses composants. En effet, les :
- cartes électroniques,
- batteries 21, et
- convertisseurs de puissance 22 contenus dans le châssis 2,
dissipent une quantité importante de chaleur, provoquant une augmentation significative de leur température. Or, une augmentation trop importante de la température de ces éléments peut engendrer une baisse de leur fiabilité et/ou réduire leur durée de vie.

C'est pourquoi le dispositif autonome D comprend un circuit de refroidissement afin d'évacuer efficacement la chaleur dissipée par ses différents composants.

Le circuit de refroidissement comprend des conduites de circulation de fluide caloporteur disposées dans le châssis 2, entre le socle mobile 1 et le sommet du châssis 2 opposé au socle mobile 1.

Les conduites de circulation peuvent être des tubes souples (par exemple en polyester glycolisé) pour faciliter leur installation dans le châssis entre les différents composants (batteries, convertisseur de puissance, unité de commande, etc.). En variante, les conduites de circulation peuvent être rigides (par exemple en cuivre).

Le fluide caloporteur peut être par exemple une huile, un alcool (comme du méthanol, de l'éthanol ou du glycol), un composé organique (comme de l'acétone, de l'ammoniac), un mélange, un nanofluide, un métal liquide, de l'eau déminéralisée ou tout type de fluide caloporteur connu de l'homme du métier.

Le circuit de refroidissement comprend également une zone d'admission d'air frais F1 positionnée au niveau de la partie inférieure du châssis 2 (i.e. au niveau du socle mobile 1), et une zone d'évacuation d'air chaud F2 positionnée au niveau de la partie supérieure du châssis 2 (i.e. au niveau d'extrémité du châssis opposée au socle mobile 1). La zone d'admission d'air frais F1 peut comprendre un (ou plusieurs) filtre(s) pour limiter les risques d'introduction de poussières dans le dispositif autonome. De même, la zone d'évacuation d'air chaud F2 peut comprendre un (ou plusieurs) filtre(s) pour limiter le rejet d'impuretés vers l'extérieur du dispositif autonome D.

Le fait de récupérer l'air frais dans la partie inférieure du châssis 2 et d'évacuer l'air chaud dans la partie supérieure du châssis 2 permet d'améliorer le refroidissement du dispositif autonome D, l'air chaud ayant tendance à se concentrer à une altitude supérieure à l'air frais.

Bien entendu, le circuit de refroidissement peut comprendre d'autres éléments, tels qu'un (ou plusieurs) échangeur(s) de chaleur, un (ou plusieurs) ventilateur(s), etc.

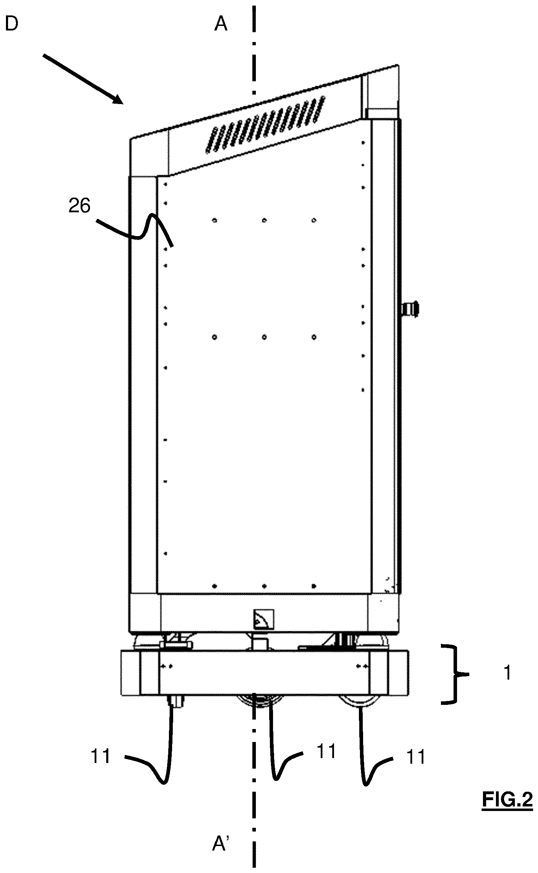

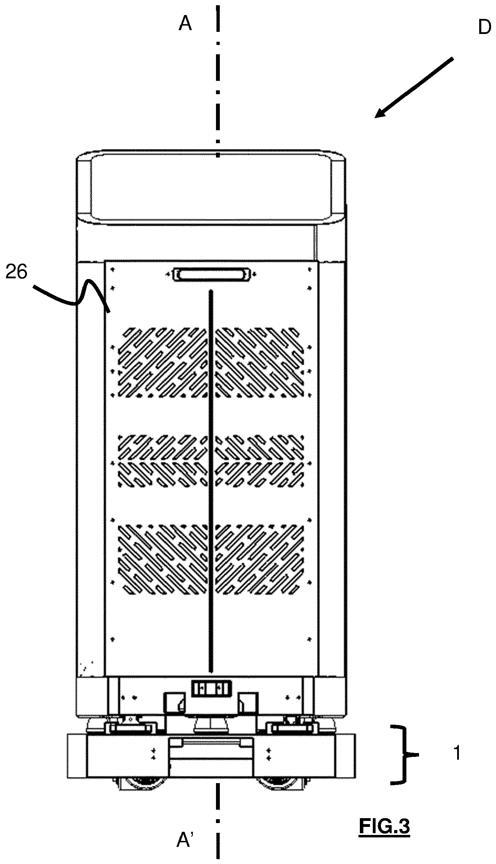

En variante, les zones d'admission d'air F1 et d'évacuation d'air F2 peuvent être ménagées chacune dans des panneaux parallèles respectifs du carénage 26. Plus précisément :
- la zone d'admission d'air F1 peut consister en des ouvertures traversantes ménagées dans des premiers panneaux parallèles du carénage 26 définissants un avant et un arrière du dispositif autonome D relativement à sa direction de déplacement (cf. figure 3),
- la zone d'évacuation d'air F2 peut consister en des ouvertures traversantes ménagées dans des deuxièmes panneaux parallèles (perpendiculaires aux premiers panneaux latéraux) définissant des flancs du dispositif autonome D relativement à sa direction de déplacement (cf. figure 2).

### 1.2.5. Moyens d'acquisition d'image

Les moyens d'acquisition d'images permettent au dispositif autonome D d'acquérir des images de son environnement.

Dans le mode de réalisation illustré aux figures 1 à 3, les moyens d'acquisition d'images comprennent une pluralité de caméras monoculaires large angle. En particulier, le dispositif autonome D comprend quatre caméras positionnées chacune sur une face latérale respective du châssis afin de recréer une vue à 360°.

Les images acquises par les caméras monoculaires sont ensuite traitées par l'unité de contrôle pour détecter les obstacles, la position du module d'accouplement, la position du véhicule, etc.

Bien entendu, le dispositif autonome D peut également comprendre d'autres types de capteurs, tels que des capteurs de distance (laser, par ultrasons, radar, etc.) pour estimer la distance entre le dispositif autonome et un objet d'intérêt (obstacle, véhicule, module d'accouplement, etc.).

On va maintenant décrire plus en détail le système de couplage 4 du dispositif autonome selon l'invention.

### 2. Système de couplage

Le système de couplage 4 comprend :
- un support 40 fixé au châssis 2,
- l'organe de raccordement 41 électrique adapté pour être déplacé en translation selon une direction sensiblement verticale (i.e. parallèle à l'axe 1-1'), l'organe de raccordement 41 étant fixé au support 40,
- des moyens de guidage 42 pour guider le déplacement en translation :
   ∘du support 40 et l'organe de raccordement 41 selon une première direction - sensiblement horizontale (i.e. perpendiculaire à l'axe longitudinal A-A') - et
   ∘de l'organe de raccordement 41 selon une deuxième direction - sensiblement vertical (i.e. parallèle à l'axe longitudinal A-A') - perpendiculaire à la première direction,
- des moyens de déplacement 43 du support 40 et de l'organe de raccordement 41,
- d'un (ou de plusieurs) capteur(s) de position pour détecter la position du support 40 et de l'organe de raccordement 41 (et en particulier pour détecter si l'organe de raccordement est dans une position escamotée ou dans une position déployée, comme il sera décrit plus en détails dans la suite),
- d'un (ou de plusieurs) capteur de présence pour détecter la présence et le positionnement du module d'accouplement.

### 3. Support

Le support 40 soutient l'organe de raccordement 41 et permet sa fixation au châssis 2. Plus précisément, le support 40 comprend :
- un pied 401 fixé au châssis 2, et
- un plateau porte-charge 402 sur lequel est fixé l'organe de raccordement 41.

Le pied 401 s'étend sensiblement dans un plan. Dans le mode de réalisation illustré à la figure 6, le pied 401 consiste en une plaque dont les extrémités latérales sont légèrement recourbées pour former des pattes de fixation. Chaque patte comprend deux trous traversants pour permettre la fixation - par exemple par boulonnage - du pied 401 sur le châssis 2. Ainsi, le pied 401 est fixe relativement au châssis 2 une fois monté sur celui-ci.

Le plateau porte-charge 402 s'étend également sensiblement dans un plan. Dans le mode de réalisation illustré à la figure 6, le plateau porte-charge 402 consiste en une plaque plane sur laquelle est fixé - par exemple par boulonnage - l'organe de raccordement 41.

Avantageusement, le support 40 comprend également un (ou des) élément(s) de liaison élastique(s) 403 monté(s) entre le pied 401 et le plateau porte-charge 402. Ce(s) élément(s) de liaison élastique(s) 403 autorise(nt) un déplacement du plateau porte-charge 402 relativement au pied 401 sous l'effet d'une contrainte appliquée sur le plateau porte-charge 402 (notamment par l'intermédiaire de l'organe de raccordement 41).

Plus précisément, en l'absence d'une contrainte mécanique appliquée sur le plateau porte-charge 402, le(s) élément(s) de liaison élastique(s) 403 permet(tent) de maintenir le plateau porte-charge 402 à une distance prédéfinie non nulle au pied 401, de sorte que le pied 401 et le plateau porte-charge 402 s'étendent dans des plans parallèles.

Lorsqu'une contrainte mécanique (supérieure à une constante de raideur d'un (ou plusieurs) élément(s) de liaison élastique(s) 403) est appliquée sur le plateau porte-charge 402 - telle qu'une force d'appui dont la composante globale s'étend selon une direction non perpendiculaire au plan dans lequel s'étend le pied 401 - alors le(s) élément(s) de liaison élastique(s) 403 autorise(nt) le déplacement du plateau porte-charge 402 relativement au pied 401, de sorte que les plans dans lesquels s'étendent le pied 401 et le plateau porte-charge 402 deviennent sécants.

Ceci permet au support 40 de compenser les éventuelles imperfections du sol lors de la connexion de l'organe de raccordement 41 au module d'accouplement M. Ceci permet en outre de compenser les éventuels jeux mécaniques existants entre les différents composants du système de couplage 4.

Le déplacement du plateau porte-charge 402 relativement au pied 401 consiste en un pivotement multidirectionnel selon des axes contenus dans un plan s'étendant parallèlement au plan du plateau porte-charge 402.

Dans le mode de réalisation illustré aux figures 6 à 8, comprend quatre éléments de liaison élastiques 403. Chaque élément de liaison élastique 403 consiste en système de type ressort/amortisseur. Notamment, chaque élément de liaison élastique 403 comprend un ressort hélicoïdal 4031 associé à une tige guide 4032 s'étendant perpendiculairement au pied 401 en direction du plateau porte-charge 402.

Chaque ressort hélicoïdal 4031 est fixé au pied 401 par l'une de ses extrémités, et plateau porte-charge 402 par son autre extrémité.

Chaque tige de guidage 4032 comprend au moins une articulation à pivot 4033 s'étendant à l'une de ses extrémités libres. Cette articulation à pivot 4033 peut être de tout type connu de l'homme du métier et comprendre par exemple un boîtier 4034 dans lequel une rotule sphérique 4035 est coiffée par un coussinet (non représenté) en matière plastique, ce dernier étant maintenu dans ledit boîtier par une rondelle de fermeture (non représentée). L'utilisation d'articulation à pivot 4033 permet un débattement angulaire limité du plateau porte-charge 402 selon les axes contenus dans le plan s'étendant parallèlement au plan du pied 401.

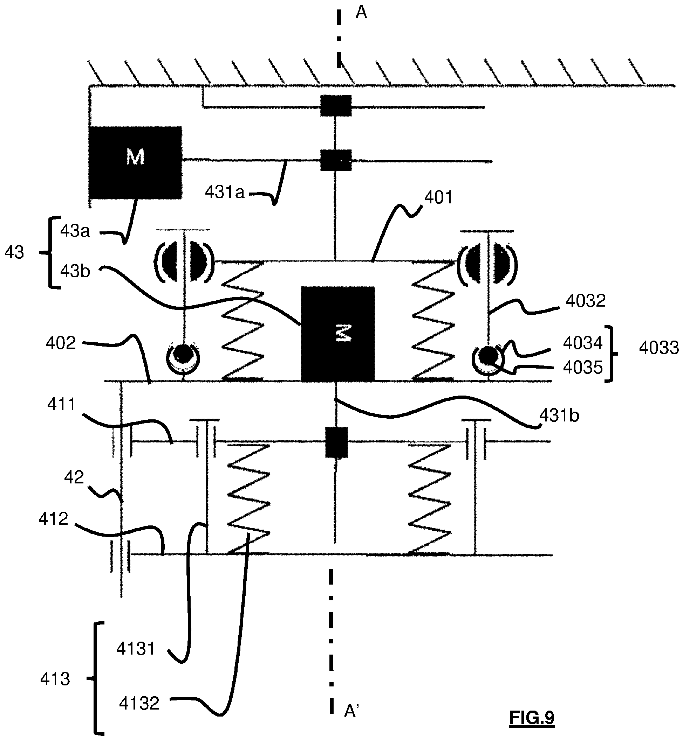

Dans le mode de réalisation illustré à la figure 9, chaque tige de guidage 4032 comprend une unique articulation à rotule 4033 fixée au plateau porte-charge 402. En variante, chaque tige de guidage 4032 peut comprendre une unique articulation à rotule 4033 fixée au pied 401. En variante encore, chaque tige de guidage 4032 peut comprendre deux articulations à rotule 4033 s'étendant à une extrémité libre respective de la tige de guidage 4032 et étant destinée à être fixées au pied 401 et au plateau porte-charge 402.

Bien entendu, l'homme du métier appréciera que les éléments de liaison élastiques 403 peuvent consister en d'autres solutions autorisant un déplacement du plateau porte-charge 402 relativement au pied 401 sous l'effet d'une contrainte appliquée sur le plateau porte-charge 402. Par exemple, dans certains modes de réalisation, chaque élément de liaison élastique 403 consiste en un élément compressible en élastomère, tel qu'un boudin pneumatique.

Le principe de fonctionnement des éléments de liaison élastiques 403 illustrés à la figure 6 est le suivant. On suppose qu'une force d'appui :
- dont la composante globale s'étend selon une direction non perpendiculaire au plan contenant le pied 401, et dont
- la valeur est supérieure à une constante de raideur des éléments de liaison élastiques 403,
est appliquée sur le plateau porte-charge 402.

En fonction de l'orientation de la force d'appui :
- un (ou plusieurs) ressort(s) hélicoïdal (hélicoïdaux) 4031 se comprime(nt),
- un (ou plusieurs) autre(s) ressort(s) hélicoïdal (hélicoïdaux) se dilate(nt), et
- les rotules sphériques 4035 pivotent dans leurs boîtiers 4034 respectifs.

Le plateau porte-charge 402 se déplace alors en rotation selon un (ou plusieurs) axe(s) relativement au pied 401 : les plans contenant le pied 401 d'une part et le plateau porte-charge 402 d'autre part deviennent sécants.

Lorsque l'application de la force d'appui est interrompue ou devient inférieure à la constante de raideur des éléments de liaison élastiques 403, ceux-ci reviennent à leur position de repos : le plateau porte-charge 402 se déplace alors en rotation (selon une orientation opposée à la rotation précédente) jusqu'à ce que le pied 401 et le plateau porte-charge 402 soit espacés de la distance prédéfinie : les plans contenant le pied 401 d'une part et le plateau porte-charge 402 d'autre part redeviennent parallèles.

### 4. Organe de raccordement

L'organe de raccordement 41 est configuré pour être déplacé entre une position escamotée et une position déployée, l'organe de raccordement 41 étant plus proche du sol dans la position déployée que dans la position escamotée.

Plus précisément :
- dans la position escamotée, l'organe de raccordement 41 s'étend (au moins partiellement) dans un logement ménagé dans le dispositif autonome D,
- dans la position déployée, l'organe de raccordement s'étend en saillie du logement,
l'organe de raccordement 41 étant plus proche du support 40 dans la position escamotée que dans la position déployée.

L'organe de raccordement 41 comprend :
- une embase 411 sur laquelle est montée un connecteur électrique,
- une plaque de centrage 412 s'étendant parallèlement à l'embase, la plaque de centrage étant plus éloignée des moyens de déplacement que l'embase,
- au moins un élément de rappel 413 élastique entre l'embase 411 et la plaque de centrage 412.

La plaque de centrage 412 est apte à se déplacer en translation relativement à l'embase 411. L'élément de rappel élastique 413 permet de maintenir la plaque de centrage 412 à une distance *« d »* non nulle de l'embase 411 lorsqu'aucune force extérieure n'est exercée sur l'embase 411 et la plaque de centrage 412.

Lorsqu'une force extérieure de compression (supérieure à une constante de raideur de l'élément de rappel élastique) est appliquée sur l'embase 411 et la plaque de centrage 412, l'élément de rappel 413 se comprime et l'embase 411 se déplace en translation vers la plaque de centrage 412 : la distance entre l'embase 411 et la plaque de centrage 412 diminue. Lorsque l'application de la force extérieure de compression est interrompue ou devient inférieure à la constante de raideur de l'élément de rappel élastique 413, celui-ci se détend jusqu'à sa position de repos : l'embase 411 se déplace en translation dans une direction opposée à la plaque de centrage 412 jusqu'à ce que l'embase 411 et la plaque de centrage 412 soit espacées de la distance « *d* ».

### 4.1. Embase

L'embase 411 permet de supporter les différents composants de l'organe de raccordement 41. Dans le mode de réalisation illustré à la figure 6, l'embase 411 consiste en un profilé longitudinal à section en U. Bien entendu, l'embase 411 peut présenter une autre forme (profilé à section en L, en H, ou encore à section carrée, circulaire ou rectangulaire, etc.) ou par exemple consister en une plaque sensiblement plane.

L'embase 411 comprend un connecteur électrique 4111 s'étendant en saillie de la face de l'embase 411 en regard de la plaque de centrage 412. Ce connecteur électrique 4111 permet le raccordement électrique de l'organe de raccordement 41 au module d'accouplement pour le passage de l'énergie électrique nécessaire au chargement/rechargement des moyens de stockage du véhicule. Plus précisément, le connecteur électrique 4111 monté sur l'embase 411 est configuré pour coopérer avec une prise électrique (de forme complémentaire) montée sur le module d'accouplement M.

### 4.2. Plaque de centrage

La plaque de centrage 412 permet d'assurer l'alignement entre le connecteur électrique 4111 de l'embase 411 et la prise électrique du module d'accouplement.

La plaque de centrage 412 est par exemple réalisée en métal. Elle peut avoir différentes formes telles qu'une forme rectangulaire, carré, parallélépipédique, etc.

La plaque de centrage 412 comprend un orifice traversant permettant le passage du connecteur électrique 4111 lorsque l'embase 411 et la plaque de centrage 412 sont à proximité l'une de l'autre.

La plaque de centrage 412 comprend en outre au moins un pion d'alignement 4121 s'étendant en saillie vers l'extérieur de sa face opposée à l'embase 411. Ce(s) pion(s) d'alignement 4121 permet(tent) d'aligner l'organe de raccordement 41 avec le module d'accouplement M (pour faciliter le raccordement du connecteur électrique 4111 à la prise électrique).

Dans le mode de réalisation illustré aux figures 6 à 8, la plaque de centrage 412 comprend deux pions d'alignement 4121 montés chacun à une extrémité respective de la plaque de centrage. Chaque pion 4121 est de forme tronconique. Plus précisément, chaque pion d'alignement consiste en un cône dont la grande base est fixée à la plaque de centrage 412. Ces pions d'alignement 4121 sont destinés à coopérer chacun avec un trou borgne respectif de forme complémentaire ménagé dans la façade F du module d'accouplement M.

### 4.3. Elément de rappel élastique

L'élément de rappel élastique 413 est fixé :
- d'une part à l'embase 411, et
- d'autre part à la plaque de centrage 412.

L'élément de rappel élastique 413 peut être de tout type connu de l'homme du métier (boudin pneumatique, ressort/amortisseur, etc.).

Dans le mode de réalisation illustré aux figures 6 à 8, le dispositif autonome D comprend quatre éléments de rappel élastiques 413 consistant chacun en un ressort hélicoïdal 4131 associé à une tige guide 4132 fixée à la plaque de centrage 412 et s'étendant perpendiculairement à la plaque de centrage 412 en direction de l'embase 411. Chaque ressort hélicoïdal 4131 est fixé à la plaque de centrage 412 par l'une de ses extrémités, et à l'embase 411 par son autre extrémité.

L'embase 411 comprend quatre lumières traversantes pour le passage des tiges guides 4132. Chaque tige guide 4132 est apte à coulisser dans sa lumière traversante associée lorsque la distance entre l'embase 411 et la plaque de centrage 412 varie. De même, le plateau porte-charge 402 et le pied 401 peuvent comprendre des lumières traversantes pour le passage des tiges guides 4132. En variante, c'est la plaque de centrage 412 qui peut comprendre des lumières traversantes pour le passage des tiges guides 4132.

Chaque tige guide 4132 comprend une butée (non représentée) à son extrémité libre. Cette butée est positionnée en regard de la face de l'embase 411 opposée à la plaque de centrage 412. La butée est destinée à venir en contact avec l'embase 411 lorsque l'organe de raccordement 41 est dans la position escamotée. Cette butée permet de maintenir la tige guide 4132 dans sa lumière traversante associée.

De préférence, chaque ressort hélicoïdal 4131 et sa tige guide associée 4132 sont positionnés au niveau d'un coin respectif de l'embase 411 et de la plaque de centrage 412. Ceci permet de limiter les risques de pivotement des plaques et de centrage 411, 412 l'une par rapport à l'autre.

### 4.4. Moyens de guidage

Les moyens de guidage 42 en translation peuvent consister en une (ou plusieurs) coulisse(s), une (ou plusieurs) glissière(s) ou tout autre moyen connu de l'homme du métier.

### 5. Moyens de déplacement

Les moyens de déplacement 43 permettent :
- d'une part de déplacer le support 40 et l'organe de raccordement 41 en translation selon une direction parallèle au plan contenant le pied 401 et orientée vers la face avant ou vers la face arrière du dispositif autonome D, et
- d'autre part de déplacer l'organe de raccordement 41 entre les positions escamotée et déployée.

Ces moyens de déplacement 43 peuvent comprendre :
- un (ou plusieurs) vérin(s) hydraulique(s), électrique(s), pneumatique(s), etc.
- un (ou plusieurs) moteur(s) à courant continu,
- un (ou plusieurs) moteur(s) pas-à-pas,
- ou tout autre moyen de déplacement connu de l'homme du métier.

En comparaison à l'utilisation d'un (ou plusieurs) vérin(s), l'utilisation d'un (ou plusieurs) moteur(s) pas-à-pas permet de limiter l'encombrement des moyens de déplacement, et donc du dispositif mobile de charge/recharge.

En comparaison à l'utilisation d'un (ou plusieurs) moteur(s) à courant continu, l'utilisation d'un (ou plusieurs) moteur(s) pas-à-pas permet d'améliorer la précision dans le déplacement de l'organe de raccordement. En effet, le dispositif mobile de charge/recharge étant destiné à être utilisé dans un environnement salissant tel qu'une aire de stationnement, il est possible que des impuretés viennent se loger sur les moyens de guidage. Dans ce cas, la durée de déplacement de l'organe de raccordement entre les positions escamotée et déployée peut varier. Avec un moteur à courant continu, cette variation dans la durée de déplacement peut induire une réduction de la course de l'organe de raccordement (puisque la consigne de commande d'un moteur à courant continu est sa durée d'activation). Avec un moteur pas-à-pas, la consigne de commande consistant en un nombre de tours, il est possible de maîtriser avec une plus grande précision la course de l'organe de raccordement entre les positions escamotée et déployée.

Dans le mode de réalisation illustré aux figures 6 à 9, les moyens de déplacement 43 consistent en :
- un (ou plusieurs) premier(s) moteur(s) 43a pas-à-pas pour le déplacement en translation du support 40 et l'organe de raccordement 41 selon une direction parallèle au plan contenant le pied 401 et orientée vers la face avant ou vers la face arrière du dispositif autonome D,
- un (ou plusieurs) deuxième(s) moteur(s) 43b pas-à-pas pour le déplacement en translation de l'organe de raccordement 41 selon une direction (A-A') perpendiculaire au plan contenant le pied 401 et orientée vers le socle 1 ou vers le couvercle du dispositif autonome D.

L'arbre de chaque moteur pas-à-pas consiste en une barre filetée.

L'arbre 431a du premier moteur 43a est adapté pour coopérer avec une ouverture taraudée ménagée dans le support 40 (par exemple dans le pied 401). La mise en rotation de l'arbre 431a du premier moteur 43a induit le déplacement en translation du support 40 et de l'organe de raccordement 41 horizontalement.

L'arbre 431b du deuxième moteur 43b est adapté pour coopérer avec une ouverture taraudée ménagée dans l'organe de raccordement 41 (par exemple dans l'embase 411). La mise en rotation de l'arbre 431b du deuxième moteur 43b induit le déplacement en translation de l'organe de raccordement 41 verticalement.

Les inventeurs ont en effet découvert que cette solution permettait de limiter les contraintes appliquées sur l'organe de raccordement, ce qui facilite son déplacement.

### 6. Principe de fonctionnement

On va maintenant décrire plus en détail le principe de fonctionnement du dispositif autonome D, en référence au raccordement électrique du dispositif autonome D avec le module d'accouplement M.

On suppose ici que :
- le module d'accouplement a été préalablement branché par l'utilisateur aux moyens de stockage d'énergie électrique de son véhicule grâce au câble électriquement conducteur, que
- le module a été positionné au sol, et que
- l'utilisateur a commandé la recharge des moyens de stockage de son véhicule auprès d'un service de gestion du dispositif autonome.

Dans une première étape, le dispositif autonome détecte grâce aux moyens d'acquisition d'images, le module d'accouplement associé au véhicule pour lequel l'utilisateur souhaite charger/recharger les moyens de stockage d'énergie. Cette détection peut être basée sur la couleur, la forme ou toute autre solution technique connue de l'homme du métier pour la détection d'un objet d'intérêt.

L'unité de contrôle 23 estime la distance séparant le dispositif autonome du module d'accouplement et pilote le socle mobile pour déplacer le dispositif autonome à une première vitesse. Lorsque la distance entre le dispositif autonome et le module d'accouplement devient inférieure à une valeur de consigne - par exemple 3 mètres - l'unité de contrôle pilote le socle mobile pour réduire la vitesse de déplacement du dispositif autonome à une deuxième vitesse inférieure à la première vitesse.

L'unité de contrôle 23 pilote le socle mobile 1 pour centrer le module d'accouplement M relativement à la niche de réception 3, et avance vers le module d'accouplement M de sorte que celui-ci pénètre dans la niche de réception 3.

Lorsque le système de couplage 4 s'étend au droit du module d'accouplement M (et en particulier l'organe de raccordement est au-dessus du module d'accouplement), l'unité de contrôle 23 commande l'immobilisation du dispositif autonome D.

L'unité de contrôle 23 commande aux moyens de déplacement 43 de déplacer le système de couplage 4 en translation selon une direction parallèle au plan contenant le pied 401 et orientée vers la face avant. Le premier moteur pas-à-pas 43a déplace le système de couplage 4 horizontalement (i.e. selon une direction horizontale perpendiculaire à l'axe A-A') pour positionner l'organe de raccordement 41 au droit de la façade F du module d'accouplement M.

Un (ou plusieurs) capteur(s) (non représenté) de détection du module - notamment un capteur ultrason monté sur le support 40 - permet(tent) de mesurer la position de l'organe de raccordement 41 relativement au module d'accouplement M. Cette mesure est transmise à l'unité de contrôle 23 pour lui permettre d'estimer si l'organe de raccordement 41 est au-dessus du module d'accouplement M ou non.

Lorsque l'organe de raccordement 41 au droit de la façade F, l'unité de contrôle 23 désactive le premier moteur pas-à-pas 43a et commande aux moyens de déplacement 43 de déplacer l'organe de raccordement 41 en translation selon une direction perpendiculaire au plan contenant le pied 401 et orientée vers le socle 1. Ceci permet de déplacer l'organe de raccordement 41 de la position escamotée vers la position déployée. Le deuxième moteur pas-à-pas 43b est activé et l'organe d'accouplement 41 (embase, plaque de centrage, élément de rappel élastique, etc.) se déplace verticalement (i.e. parallèlement à l'axe A-A') en direction de la façade F du module d'accouplement M. Le (ou les) pion(s) d'alignement pénètre(nt)n dans le(s) trou(s) borgne(s) ménagé(s) dans la façade F.

Les formes tronconiques complémentaires :
- du (ou des) pion(s) d'alignement et
- du (ou des) trou(s) borgne(s)
permettent (par frottement lors de l'introduction du/des pions dans le/les trous borgnes) d'ajuster la position du module d'accouplement relativement à l'organe de raccordement.

Lorsque le(s) pion(s) d'alignement a (ont) totalement pénétré(s) dans le(s) trou(s) borgne(s), la plaque de centrage 412 vient en appui contre la face supérieure du module d'accouplement. L'organe de raccordement 41 continuant sa course vers la position déployée, l'élément (ou les éléments) de rappel élastique 413 se comprime(nt) et la distance entre la plaque de centrage 412 et l'embase 411 diminue. La tige guide 4132 de chaque élément de rappel 413 coulisse dans la lumière traversante de l'embase 411 qui lui est associée.

La distance entre l'embase 411 et la plaque de centrage 412 continue à se réduire jusqu'à ce que le connecteur électrique 4111 pénètre dans l'orifice traversant ménagé dans la plaque de centrage 412 et vienne s'enficher dans la (ou les) prise(s) électrique(s) (de forme complémentaire) logée(s) dans la façade F.

Lorsque le connecteur électrique 4111 est enfiché dans la (ou les) prise(s) électrique(s) du module d'accouplement M, l'unité de contrôle 23 désactive le deuxième moteur pas-à-pas 43b et la charge/recharge des moyens de stockage du véhicule peut débuter.

Une fois les moyens de stockage du véhicule chargés/rechargés, l'unité de contrôle 23 commande le déplacement de l'organe de raccordement 41 de la position déployée vers la position escamotée. Pour ce faire, l'unité de contrôle 23 active les moyens de déplacement 43 du système de couplage 4.

L'embase 411 se déplace verticalement vers le châssis 2 du dispositif autonome D. La force de compression de l'élément (ou des éléments) de rappel 413 tend à maintenir le module d'accouplement M plaqué contre le sol. Ceci facilite le dégagement du connecteur électrique 4111 qui se détache de la (ou des) prise(s) électrique(s) du module d'accouplement M.

Une fois l'élément (ou les éléments) de rappel 413 revenu(s) à sa (leur) position de repos, l'organe de raccordement 41 (i.e. embase, la plaque de centrage, élément de rappel élastique) se déplace verticalement vers le haut (i.e. vers le châssis) jusqu'à la position escamotée.

Le dispositif autonome peut alors se déplacer pour charger/recharger les moyens de stockage d'énergie d'un autre véhicule V.

### 7. Capteurs

Le dispositif autonome décrit précédemment comprend également plusieurs jeux de capteurs connectés électriquement à l'unité de contrôle 23, et notamment :
- un premier jeu de capteurs dit *« de connexion à vide »,*
- un deuxième jeu de capteurs dit *« de fin de course horizontale »,*
- un troisième jeu de capteurs dit *« de détection d'inclinaison ».*

Les capteurs des premier deuxième et troisième jeux peuvent être des micro-rupteurs. Par exemple, chaque capteur peut inclure :
- une enveloppe externe,
- un bouton poussoir apte à être déplacé entre une position initiale et une position sollicitée,
- une lame élastique électriquement conductrice, et
- des première et deuxième bornes électriquement conductrices.

Le bouton poussoir s'étend en sailli vers l'extérieur de l'enveloppe. Contrairement à un interrupteur, un bouton poussoir revient dans sa position initiale en l'absence de contrainte.

Le bouton poussoir est configuré pour agir sur la lame élastique servant à établir ou interrompre le contact électrique entre la première borne servant d'articulation à la lame et la deuxième borne.

La lame est configurée pour passer brusquement d'une position de repos vers une position active lorsque le bouton poussoir atteint un niveau prédéterminé d'enfoncement.

Le mode de fonctionnement de chaque capteur est avantageusement en *« marche inverse »,* c'est-à-dire qu'en l'absence de sollicitation du bouton poussoir, un courant de référence circule entre les première et deuxième bornes du capteur. A l'inverse, lorsqu'une contrainte est appliquée sur le bouton poussoir, celui-ci s'enfonce dans l'enveloppe et agit sur la lame de sorte qu'aucun courant ne circule entre les première et deuxième bornes. Cette configuration en *« marche inverse »* permet à l'unité de contrôle d'une part de détecter que l'un des capteurs est activé (i.e. bouton poussoir enfoncé), et d'autre part de détecter un capteur défectueux.

### 7.1. Premier jeu de capteurs de connexion à vide

Le premier jeu de capteurs permet de détecter l'absence de module d'accouplement M lors du déplacement en translation verticale de l'organe de raccordement 41. En effet, il est possible, que l'utilisateur retire le module d'accouplement M avant que l'organe de raccordement 41 soit raccordé à la (ou aux) prise(s) électrique(s) logée(s) dans la façade F du module d'accouplement M.

Pour éviter un risque de détérioration de l'organe de raccordement 41 par mise en contact de celui-ci avec le sol, le dispositif comprend le premier jeu de capteurs *« de connexion à vide ».* En pratique, le premier jeu de capteurs *« de connexion à vide »* comprend deux capteurs montés sur une armature du dispositif autonome D.

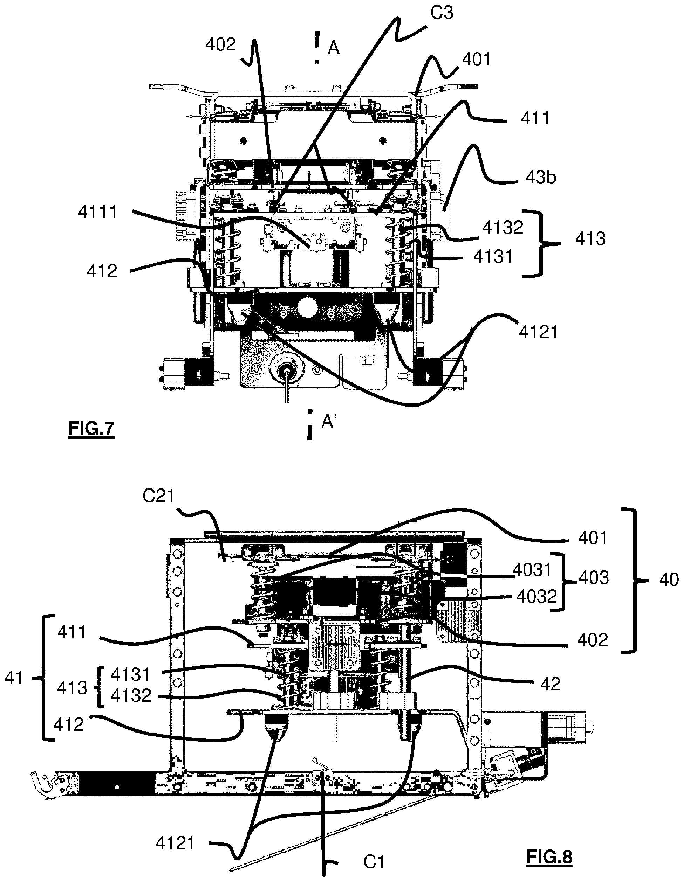

L'un des capteurs C1 de ce jeu est illustré à la figure 8. Il consiste en un micro-rupteur et est positionné sous l'organe de raccordement, à une distance prédéterminée du sol inférieure à la hauteur de la façade F. Ainsi, lorsque l'organe de raccordement vient en contact avec le bouton poussoir du capteur C1, c'est que l'organe de raccordement n'a pas rencontré la façade F du module d'accouplement M (i.e. module d'accouplement absent).

### 7.2. Deuxième jeu de capteurs « de fin de course horizontale »

Le deuxième jeu de capteurs permet de limiter le déplacement en translation horizontale du support 40 et de l'organe de raccordement 41 entre des positions extrêmes dites reculée et avancée. Un déplacement du support 40 et de l'organe de raccordement 41 pourrait détériorer le dispositif autonome D.

En référence à la figure 8, certains capteurs C21 du deuxième jeu permettent de détecter si, lors du déplacement en translation du support 40 et de l'organe de raccordement 41 vers l'extérieur de la cavité (définissant la niche de réception 3), une position extrême avancée a été atteinte.

En référence à la figure 6, d'autres capteurs C22 du deuxième jeu permettent de détecter si, lors du déplacement en translation du support 40 et de l'organe de raccordement 41 vers l'intérieur de la cavité (définissant la niche de réception 3), une position extrême reculée a été atteinte.

### 7.3. Troisième jeu de capteurs « de détection d'inclinaison »

Le troisième jeu de capteurs permet de vérifier que le pied 401 et le plateau porte-charge 402 s'étendent sensiblement dans des plans parallèles en l'absence d'une contrainte mécanique appliquée sur le plateau porte-charge 402.

En effet, même si les éléments de liaison élastique sont configurés pour maintenir le pied 401 et le plateau porte-charge 402 dans des plans parallèles en l'absence de contrainte sur le plateau, il est possible qu'un des deuxièmes moteurs 43b *« saute un pas »* de sorte que le plateau porte-charge 402 ne revienne pas dans un plan parallèle au plan contenant le pied 401 en l'absence de contrainte mécanique.

Le troisième jeu de capteurs permet de vérifier ce parallélisme afin de limiter les risques de détérioration des moyens de déplacement 43.

En référence à la figure 7, le troisième jeu comprend deux capteurs C3 montés sur l'embase 411 à deux positions différentes. Les boutons poussoirs de ces deux capteurs sont supposés être activés en même temps lorsque l'organe de raccordement 41 revient dans la position escamotée.

Si l'un des boutons poussoirs n'est pas activé lors du retour de l'organe de raccordement 41 dans la position escamotée, alors le plateau porte-charge 402 n'est pas parallèle au pied 401. Dans ce cas, l'unité de contrôle commande peut commander l'activation de l'un des deuxièmes moteurs 43b pour corriger ce non-parallélisme.

### 8. Conclusions

Le dispositif autonome D décrit précédemment permet de charger/recharger les moyens de stockage d'énergie d'un véhicule V en toute sécurité.

Le lecteur aura compris que de nombreuses modifications peuvent être apportées à l'invention décrite précédemment sans sortir matériellement des nouveaux enseignements et des avantages décrits ici.

## Revendications

1. Dispositif autonome (D) de chargement/rechargement de moyens de stockage d'énergie électrique d'un véhicule (V), le dispositif autonome (D) s'étendant verticalement selon une axe verticale A-A' et comprenant :
- un socle mobile (1) incluant des roues (11) pour le déplacement du dispositif autonome,
- un châssis (2) monté sur le socle mobile (1),
- un système de couplage (4) adapté pour coopérer avec un module d'accouplement (M) et incluant :
∘un organe de raccordement (41) pour raccorder électriquement le dispositif autonome au module d'accouplement, et
odes moyens de déplacement (43) pour déplacer l'organe de raccordement (41) en translation selon l'axe A-A' entre une position escamotée et une position déployée, l'organe de raccordement (41) étant plus proche du socle mobile (1) dans la position déployée que dans la position escamotée,
***caractérisé en ce que*** le système de couplage (4) comprend en outre :
- un support (40) fixé au châssis (2) et sous lequel est fixé l'organe de raccordement (41), ledit support (40) incluant :
∘un pied (401) fixé au châssis (2), et
∘un plateau porte-charge (402) sous lequel est fixé l'organe de raccordement (41),
∘au moins un élément de liaison élastique (403) monté entre le pied (401) et le plateau porte-charge (402), ledit et au moins un élément de liaison élastique (403) autorisant un pivotement multidirectionnel du plateau porte-charge (402) relativement au pied (401).

2. Dispositif autonome selon la revendication 1, ***dans lequel*** le plateau porte-charge (402) s'étend sensiblement dans un plan, ***et dans lequel*** ledit et au moins un élément de liaison élastique (403) autorise un débattement angulaire limité du plateau porte-charge (402) selon des axes contenus dans un plan s'étendant parallèlement au plan du plateau porte-charge (402).

3. Dispositif autonome selon l'une quelconque des revendications 1 ou 2, ***dans lequel*** le pied (401) et le plateau porte-charge (402) s'étendent sensiblement dans des plans respectifs, ledit et au moins un élément de liaison élastique (403) étant configuré pour :
∘maintenir le pied (401) et le plateau porte-charge (402) dans des plans parallèles en l'absence d'une contrainte mécanique appliquée sur le plateau porte-charge (402),
∘maintenir le pied (401) et le plateau porte-charge (402) dans des plans sécants lorsqu'une contrainte mécanique est appliquée sur le plateau porte-charge (402).

4. Dispositif autonome selon l'une quelconque des revendications 1 à 3, ***dans lequel*** ledit et au moins un élément de liaison élastique (403) est fixé au pied (401) d'une part et au plateau porte-charge (402) d'autre part, et comporte :
∘un ressort hélicoïdal (4031), et
∘une tige guide (4032) coaxiale au ressort hélicoïdal (4031), la tige guide (4032) incluant au moins une articulation à pivot (4033) à l'une de ses extrémités libres.

5. Dispositif autonome selon l'une quelconque des revendications 1 à 4, ***dans lequel*** les moyens de déplacement (43) comprennent au moins un moteur pas à pas (43a) pour déplacer l'organe de raccordement (41) en translation selon un axe perpendiculaire à l'axe verticale A-A'.

6. Dispositif autonome selon l'une quelconque des revendications 1 à 5, ***dans lequel*** les moyens de déplacement (43) comprennent au moins un moteur pas à pas (43b) pour déplacer l'organe de raccordement (41) en translation selon l'axe A-A' entre la position escamotée et la position déployée.

7. Dispositif autonome selon l'une quelconque des revendications 1 à 6, ***dans lequel*** l'organe de raccordement (41) comporte :
- au moins une embase (411) ayant un connecteur électrique (4111) destiné à être connecté électriquement à une prise électrique complémentaire ménagée dans le module d'accouplement,
- au moins une plaque de centrage (412) s'étendant parallèlement à l'embase (411), la plaque de centrage (412) étant positionnée sous l'embase (411) de sorte que la plaque de centrage (412) est plus éloignée du châssis (2) que l'embase (411),
- au moins un élément de rappel élastique (413) entre l'embase (411) et la plaque de centrage (412),
de sorte que la plaque de centrage (412) est montée mobile en translation relativement à l'embase (411).

8. Dispositif autonome selon la revendication 7, ***dans lequel*** l'organe de raccordement (41) comprend en outre :
- au moins un capteur de position pour détecter si l'organe de raccordement est dans la position escamotée ou dans la position déployée,
- au moins un capteur de présence pour détecter la présence et le positionnement du module d'accouplement.

9. Dispositif autonome selon l'une quelconque des revendications 7 ou 8, ***dans lequel*** chaque élément de rappel élastique (413) comprend :
- un ressort hélicoïdal (4131), l'une des extrémités du ressort hélicoïdal étant fixée à l'embase, et l'autre des extrémités du ressort hélicoïdal étant fixés à la plaque de centrage, et
- une tige guide (4132) s'étendant à l'intérieur du ressort hélicoïdal, la tige guide étant fixée à la plaque de centrage de sorte à s'étendre perpendiculairement à celle-ci, l'embase comportant une lumière traversante pour le passage de la tige guide, l'extrémité libre de la tige guide comprenant une butée s'étendant en regard d'une face de l'embase opposée à la plaque de centrage.

10. Dispositif autonome selon l'une quelconque des revendications 7 à 9, ***dans lequel*** la plaque de centrage comprend au moins un pion d'alignement (4121) s'étendant en saillie vers l'extérieur d'une face de la plaque de centrage opposée à l'embase, ledit pion étant destiné à coopérer avec un trou borgne de forme complémentaire ménagé dans le module d'accouplement.

11. Dispositif autonome selon la revendication 10, ***dans lequel*** chaque pion est de forme tronconique partielle ou totale.

12. Dispositif autonome selon l'une quelconque des revendications 1 à 11, ***dans lequel*** le système de couplage comprend en outre des moyens de guidage (42) pour guider le déplacement en translation de l'organe de raccordement.
